# EUROPEAN PATENT SPECIFICATION

(11) **EP 4 190 495 B1**
(45) Date of publication and mention of the grant of the patent: **07.02.2024**
(21) Application number: 21850223.5
(22) Date of filing: 29.07.2021
(51) Int. Cl.: B25B 27/02, H01M 10/04, B25J 15/00, B25B 5/00, B25B 5/08, B25B 5/10, B25B 5/14, B25J 15/02, B25J 15/06, B25J 15/10

(54) **APPARATUS FOR AUTOMATICALLY DISASSEMBLING POWER BATTERY MODULE**
VORRICHTUNG ZUR AUTOMATISCHEN DEMONTAGE EINES LEISTUNGSBATTERIEMODULS
APPAREIL DE DÉMONTAGE AUTOMATIQUE DE MODULE DE BATTERIE D'ALIMENTATION

(30) Priority: 29.07.2020 CN 202010743853
(43) Date of publication of application: 07.06.2023
(73) Proprietor: Guangdong Brunp Recycling Technology Co., Ltd., Foshan, Guangdong 528100 (CN); Hunan Brunp Recycling Technology Co., Ltd., Changsha, Hunan 410600 (CN); Hunan Brunp Vehicles Recycling Co., Ltd., Changsha, Hunan 410600 (CN)
(72) Inventor: YU, Haijun, Foshan, Guangdong 528100 (CN); WU, Jindong, Foshan, Guangdong 528100 (CN); XIE, Yinghao, Foshan, Guangdong 528100 (CN); ZHANG, Xuemei, Foshan, Guangdong 528100 (CN)
(74) Representative: Torner, Juncosa I Associats, SL
(86) International application number: PCT/CN2021/109094
(87) International publication number: WO 2022/022602

(56) References cited:
- EP-A1- 2 867 934
- CN-A- 106 981 678
- CN-A- 106 981 678
- CN-A- 108 372 513
- CN-A- 109 638 337
- CN-A- 111 843 921
- CN-U- 207 719 332
- CN-U- 207 719 332
- CN-U- 207 818 793
- CN-U- 211 125 862
- CN-U- 211 125 862
- CN-U- 212 553 644
- US-A1- 2007 046 048

## Description

### TECHNICAL FIELD

The present disclosure relates to the field of equipment for disassembling battery module, and in particular to a device for automatically disassembling a traction battery module.

### BACKGROUND

With the rapid development of new energy vehicles, traction batteries have been widely used. In the forward design and manufacturing process of new energy vehicles, in order to improve the structural stability, safety and spatial expandability of a traction battery in use, traction battery modules are generally arranged very compactly in structural position when being filled into a battery box/pack, which can not only improve the utilization rate of space, but also improve the overall safety and stability of the traction battery. However, this feature has become the biggest problem that restricts the disassembly after the traction battery is decommissioned. Because the traction battery modules are closely arranged in the battery box/pack, and the traction battery modules have great mass, it is difficult to implement the efficient disassembly of the battery pack without a corresponding disassembling device/equipment. Conventional battery module disassembling equipment needs manual operation by workers, and cannot implement automatic operation, such that not only considerable labor is required, but also the conventional disassembling device has a relatively fixed structure and cannot implement compatible disassembly of battery modules with different shapes and sizes.

CN 106981678-A discloses a gripper fixture for placing a power battery module into a box according to the preamble of claim 1; the griper fixture comprises: a support plate for bearing parts; a robot quick-change disc female joint connected with the support plate; a first driving cylinder and a second driving cylinder, wherein the first driving cylinder and the second driving cylinder are used for driving a first hook set and a second hook set connected with the driving cylinders to move according to a preset rail. The gripper fixture provided by the application is equipped with the robot quick-change disc female; it is possible for the gripper fixture to mate with other assembly modules; it is possible to correct the size of a battery module, gripping is not performed if the size is unqualified, and damage of the battery module is prevented; it can be ensured that the size of a battery module is unchanged, and loading a battery pack subsequently is facilitated; through support limiter pins, the battery module is avoided being separated from the bottom; the unchanged size of the battery module can be ensured, and placing in the battery pack is facilitated.

### SUMMARY

The present disclosure aims to solve at least one of the technical problems existing in the prior art. Therefore, the present disclosure provides a device for automatically disassembling a traction battery module, which can implement compatible disassembly of battery modules with different shapes and sizes.

The device for automatically disassembling a traction battery module according to the present invention comprises a connecting rack, a first gripping device, a second gripping device and a third gripping device, wherein the first gripping device is mounted on the connecting rack, the first gripping device comprises a first hook set, a second hook set, a first driving assembly and a second driving assembly, the first driving assembly is configured to drive the first hook set and/or the second hook set to move, the first hook set and the second hook set each are provided with two hooks that are arranged symmetrically and relatively movable, and the second driving assembly is configured to drive two of the hooks to move relatively; the second gripping device comprises several locking elements movably arranged on the connecting rack, a third driving assembly and a fourth driving assembly, the third driving assembly is configured to drive the locking elements to move transversely and longitudinally, the locking elements each comprise a sleeve and a pull rod movably connected in the sleeve, and the fourth driving assembly is configured to drive the pull rod to move; a bottom end of the pull rod is provided with a fixed portion, and one end of the sleeve that is close to the fixed portion is provided with a plurality of movable plates; when the fixing portion is positioned in the plurality of movable plates, the fixed portion enables the plurality of movable plates to open; and the third gripping device comprises a sucker mounted on the connecting rack.

The device for automatically disassembling a traction battery module according to the embodiment of the present disclosure has at least the following technical effects: the first gripping device is equipped with the hooks and is adjustable in position so as to be adapted to disassemble a traction battery module with hook grooves; the second gripping device is equipped with the locking elements and is adjustable in position so as to be adapted to disassemble a traction battery module with a cylindrical groove; the third gripping device is equipped with the sucker so as to be adapted to disassemble a traction battery module without hook grooves and with cylindrical grooves; and the first gripping device, the second gripping device and the third gripping device are provided to disassemble traction battery modules with different structures, shapes and sizes, thereby replacing conventional manual operations and reducing the loss of manpower.

According to some embodiments of the present disclosure, the first gripping device further comprises a frame connected to the connecting rack, the first driving assembly is mounted on the frame, the first driving assembly comprises a first lead screw, a first motor and a first slider, an upper end of the first hook set is connected to the bottom of the first slider, and an upper end of the second hook set is connected to the bottom of the frame.

According to the present invention, the second driving assembly comprises a second slider, a mount, a baffle, a first spring, a cylinder, a third slider and a push plate, the hooks are connected to the second slider, the bottom of the mount is provided with a first sliding slot matching with the hooks and the second slider, the second slider is mounted in the first sliding slot, the first sliding slot is sealed by the baffle, and the first spring is disposed between the baffle and the second slider; the cylinder is connected to the third slider, the bottom of the third slider is connected to the push plate, the mount is provided with a second sliding slot matching with the third slider, the push plate and the second slider, and the third slider and the push plate are mounted above the second sliding slot; and when the cylinder pushes the push plate to move downwards, the push plate abuts against the second slider such that the push plate pushes the second slider to move along the first sliding slot.

According to some embodiments of the present disclosure, the second slider is triangular, the push plate is triangular, and a notch matching with the push plate is provided at a position where the second slider abuts against the push plate.

According to some embodiments of the present disclosure, four locking elements are provided, the third driving assembly comprises a base connected to the connecting rack, a translation frame body, a second motor, a second lead screw, a third motor, a third lead screw and a fourth motor, the base is provided with a first recess and a second recess, the translation frame body is movably connected to the first recess, the four locking elements are movably connected to the second recess and the translation frame body respectively, and the second motor drives the translation frame body to move; the two locking elements located on the translation frame body are connected to the second lead screw, and the second lead screw is connected to the third motor; the two locking elements located on the second recess are connected to the third lead screw, and the third lead screw is connected to the fourth motor; and threads of the second lead screw and threads of the third lead screw each are divided into two sections, and the two sections of threads run in reverse directions.

According to some embodiments of the present disclosure, the fourth driving assembly comprises a chassis, a driving wheel, a fifth motor and a driven wheel, the sleeve is mounted on the chassis, the bottom of the pull rod is provided with threads, the driving wheel is connected to the fifth motor, and the driven wheel is in threaded connection with both the driving wheel and the pull rod.

According to some embodiments of the present disclosure, the bottom of the sucker is provided with a partition plate and a plurality of suction holes.

According to some embodiments of the present disclosure, the sleeve is provided with a plurality of third recesses, the plurality of movable plates are hinged to the third recesses, and a second spring is provided at each hinged position.

According to some embodiments of the present disclosure, a front end of the fixed portion is a rounded fillet, and a rear end of the fixed portion is conical.

According to some embodiments of the present disclosure, the baffle comprises a base plate, a middle plate mounted on the base plate and a fixing strut mounted on the middle plate, and the middle plate matches with the first sliding slot.

Additional aspects and advantages of the present disclosure will be partly given in the following description, partly become apparent from the following description or be understood through practice of the present disclosure.

### BRIEF DESCRIPTION OF DRAWINGS

Additional aspects and advantages of the present disclosure will become apparent and readily understood with reference to the description of embodiments taken with reference to the following accompanying drawings, wherein
Fig. 1 is a schematic structural diagram of a device for automatically disassembling a traction battery module according to an embodiment of the present disclosure;
Fig. 2 is a schematic structural diagram of a first gripping device shown in Fig. 1;
Fig. 3 is a schematic structural diagram of a second gripping device shown in Fig. 1;
Fig. 4 is a schematic structural diagram of a third gripping device shown in Fig. 1;
Fig. 5 is a schematic structural diagram of the bottom of the second gripping device shown in Fig. 3;
Fig. 6 is a schematic partial enlarged structural diagram of a locking element shown in Fig. 5;
Fig. 7 is a schematic structural diagram of the connection between a second driving device and hooks shown in Fig. 2;
Fig. 8 is a schematic structural diagram of the bottom of the third gripping device shown in Fig. 4;
Fig. 9 is a schematic structural diagram of a stopper shown in Fig. 7;
Fig. 10 is a schematic structural diagram of the first gripping device and a traction battery module shown in Fig. 2;
Fig. 11 is a schematic structural diagram of the second gripping device and a traction battery module shown in Fig. 3; and
Fig. 12 is a schematic structural diagram of the third gripping device and a traction battery module shown in Fig. 4.

List of reference signs: connecting rack 100, first gripping device 200, first hook set 210, second hook set 220, hook 221, first driving assembly 230, first lead screw 231, first motor 232, first slider 233, second driving assembly 240, second slider 241, notch 2411, mount 242, first sliding slot 2421, second sliding slot 2422, baffle 243, base plate 2431, middle plate 2432, fixing strut 2433, first spring 244, cylinder 245, third slider 246, push plate 247, frame 250, second gripping device 300, locking element 310, third driving assembly 320, base 321, first recess 3211, second recess 3212, translation frame body 322, second motor 323, second lead screw 324, third motor 325, third lead screw 326, fourth motor 327, fourth driving assembly 330, chassis 331, driving wheel 332, fifth motor 333, driven wheel 334, sleeve 340, third recess 341, second spring 342, pull rod 350, fixed portion 360, movable plate 370, third gripping device 400, sucker 410, partition plate 411, suction hole 412, suction pipe 420, traction battery module 500, hook groove 510, cylindrical groove 520.

### DETAILED DESCRIPTION

Embodiments of the present disclosure will be described in detail below. Examples of the embodiments are shown in the accompanying drawings, and throughout the drawings, the same or similar reference numerals refer to the same or similar elements or elements having the same or similar functions. The embodiments described below with reference to the accompanying drawings are exemplary and are merely intended to explain the present disclosure, and should not be understood as limiting the present disclosure.

In the description of the present disclosure, "several" means one or more, and "a plurality of means" more than two. "Greater than", "less than", "exceeding", etc. should be understood as excluding this number, and "above", "below", "within", etc. should be understood as including this number. It should be understood that, if orientation description is involved, the orientation or position relationship indicated by for example upper, lower, front, back, left, right and middle is based on the orientation or position relationship shown in the accompanying drawings. These terms are just intended to facilitate the description of the present disclosure and simplify the description, and not to indicate or imply that the device or elements referred to must have a specific orientation and must be constructed and operated in a specific orientation, and hence will not be understood as a limitation to the present disclosure.

In the description of the present disclosure, unless otherwise explicitly defined, the words such as mounting and connection should be understood in a broad sense, and those skilled in art may reasonably determine the specific meaning of the above words in the present disclosure in conjunction with the specific contents of the technical solution.

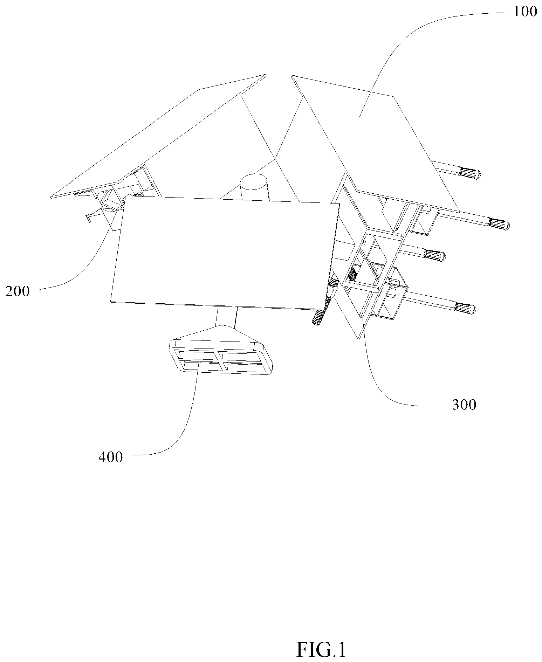

Referring to Figs. 1, 2, 3 and 4, a device for automatically disassembling a traction battery module according to an embodiment of the present disclosure comprises a connecting rack 100, a first gripping device 200, a second gripping device 300 and a third gripping device 400, wherein the first gripping device 200 is mounted on the connecting rack 100, the first gripping device 200 comprises a first hook set 210, a second hook set 220, a first driving assembly 230 and a second driving assembly 240, the first driving assembly 230 is configured to drive the first hook set 210 and/or the second hook set 220 to move, the first hook set 210 and the second hook set 220 each are provided with two hooks 221 that are symmetrically arranged and relatively movable, and the second driving assembly 240 is configured to drive the two of the hooks 221 to move relatively; The second gripping device 300 comprises several locking elements 310 movably arranged on the connecting rack 100, a third driving assembly 320 and a fourth driving assembly 330, wherein the third driving assembly 320 is configured to drive the locking elements 310 to move transversely and longitudinally, the locking elements 310 each comprise a sleeve 340 and a pull rod 350 movably connected in the sleeve 340, and the fourth driving assembly 330 is configured to drive the pull rod 350 to move. A bottom end of the pull rod 350 is provided with a fixed portion 360, and one end of the sleeve 340 that is close to the fixed portion 360 is provided with a plurality of movable plates 370. When the fixing portion 360 is located in the plurality of movable plates 370, the fixed portion 360 enables the plurality of movable plates 370 to open. The third gripping device 400 comprises a sucker 410 mounted on the connecting rack 100.

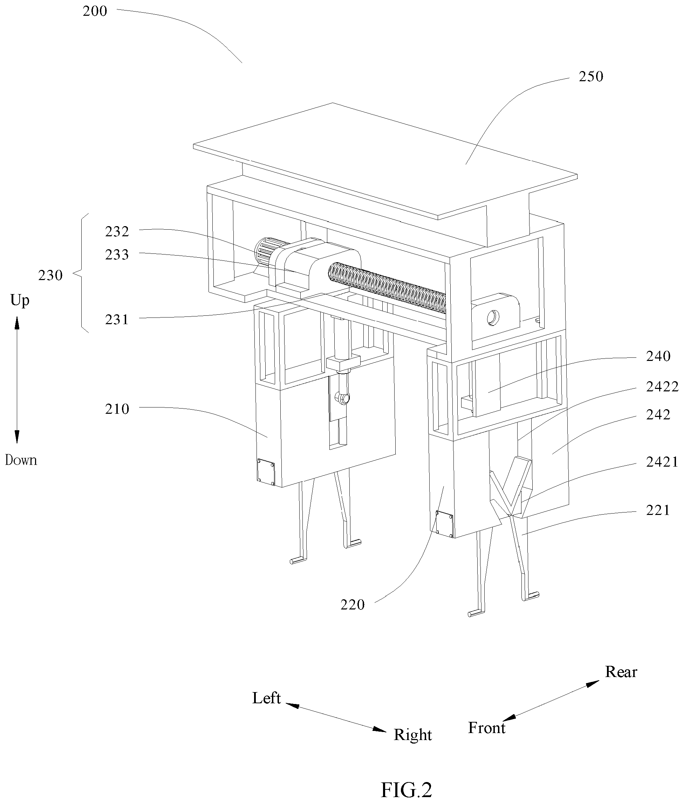

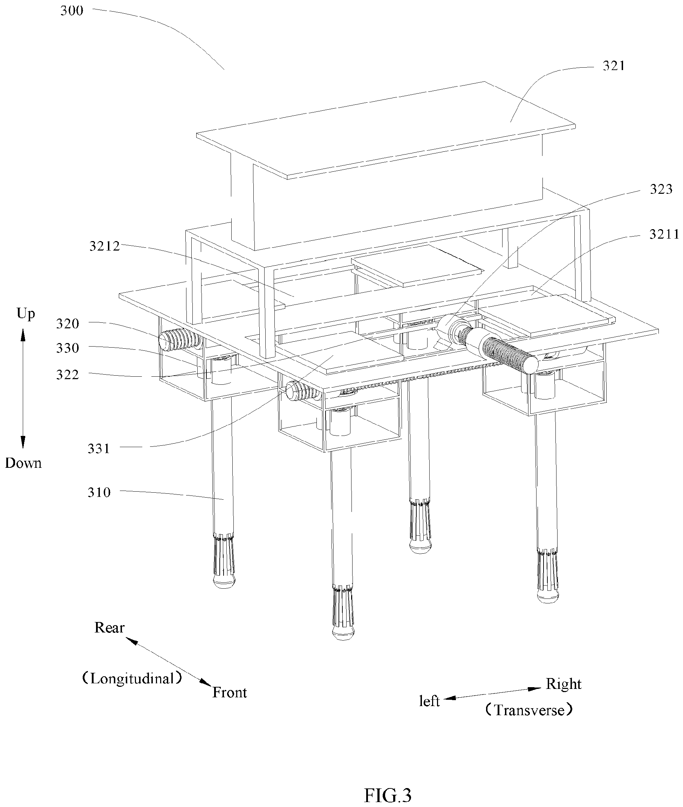

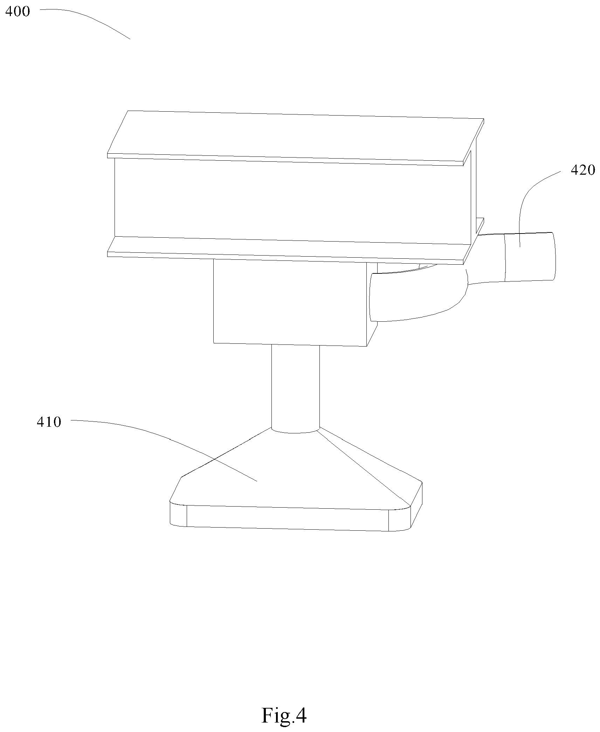

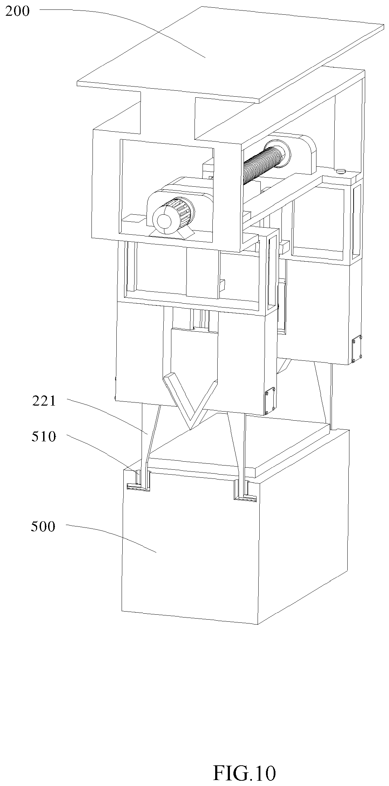

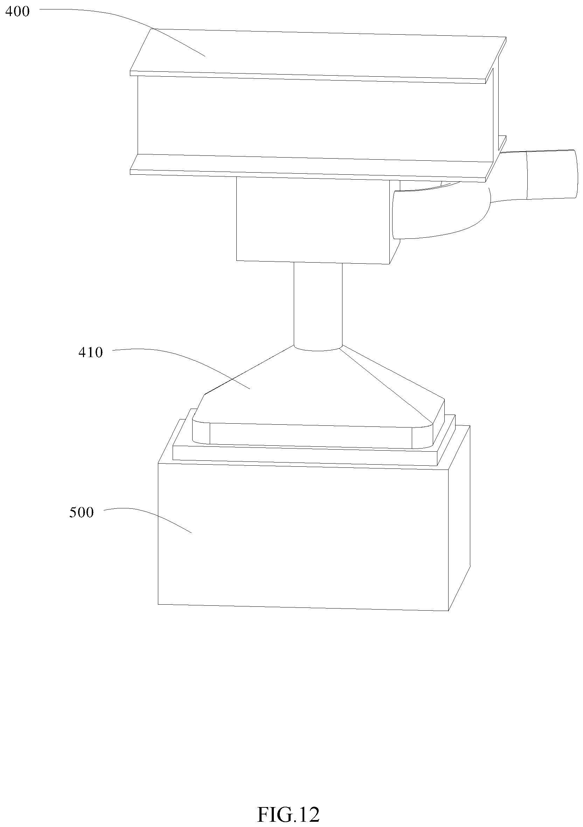

For example, as shown in Fig. 1, the connecting rack 100 is connected to a manipulator, and the manipulator can rotate and move the connecting rack 100. Specifically, the connecting rack 100 may have a trilobal shape with a central portion provided with a connecting shaft connected to a robot arm. The first gripping device 200, the second gripping device 300 and the third gripping device 400 are respectively arranged on a leaf of the trilobal shape. During operation, the connecting rack 100 is rotated and moved as required, and the first gripping device 200, the second gripping device 300 or the third gripping device 400 approaches a traction battery module 500, and continues to grip the traction battery module. As shown in Figs. 1 and 2, the first gripping device 200 is mounted on the connecting rack 100. In a first embodiment of the first gripping device 200, the first hook set 210 and the second hook set 220 are movably arranged on the connecting rack 100, and the first driving assembly 230 is configured to drive the first hook set 210 and the second hook set 220 to be movably arranged on the connecting rack 100. Specifically, the first driving assembly 230 may be two cylinders respectively arranged on two sides of the connecting rack 100, the cylinders pushing the first hook set 210 and the second hook set 220 to move left and right, or may be of a structure in which a lead screw, a slide rail and a motor cooperate. In a second embodiment, the second hook set 220 is fixedly arranged on the connecting rack 100, the first hook set 210 is movably arranged on the connecting rack 100 in a position corresponding to the second hook set 220, and the first driving assembly 230 is configured to drive the first hook set 210 to move. Specifically, the first driving assembly 230 may be a cylinder pushing the first hook set 210 to move left and right. In a third embodiment, the first hook set 210 is fixedly arranged on the connecting rack 100, the second hook set 220 is movably arranged on the connecting rack 100 in a position corresponding to the first hook set 210, and the first driving assembly 230 is configured to drive the second hook set 220 to move. Specifically, the second driving assembly 240 may be a cylinder pushing the second hook set 220 to move left and right. As shown in Fig. 2, two hooks 221 which are symmetrically arranged and move relatively are provided, and the second driving assembly 240 is configured to drive the two hooks 221 to move relatively. For example, as shown in Fig. 10, the two hooks 221 of the second hook set 220 are oriented in opposite directions, and when moving, the two hooks 221 move forward and backward respectively, so as to be adapted to traction battery modules 500 with hook grooves 510 of different depths. Specifically, the hooks 221 are cylindrical and are parallel to the horizontal plane, and the second driving assembly 240 may be two cylinders respectively connected to the hooks 221. During the operation of the first gripping device 200, the first driving assembly 230 drives the first hook set 210 and/or the second hook set 220 to move left and right to a position aligned to the hook groove 510 of the traction battery module 500, the second driving assembly 240 drives the hooks 221 to move forward and backward to lock in the hook groove 510 and then remove the traction battery module 500, so as to be adapted for traction battery modules 500 with different sizes and with hook grooves 510 of different depths. In a first embodiment of the second gripping device 300, four locking elements 310 are provided, the third driving assembly 320 may be two parallel first guide rails arranged on the connecting rack 100 and two parallel second guide rails movably arranged on the first guide rails, and the four locking elements 310 are respectively mounted on the two second guide rails. The first guide rails transversely move toward the second guide rails, the second guide rails longitudinally move toward the locking elements 310, each locking element 310 is connected to a cylinder or a lead screw and motor matching structure for pushing the locking elements 310 to move on the second guide rails, and the two second guide rails are connected to a structure in which the cylinder or the lead screw and motor cooperate for pushing the second guide rails to move. Specifically, the fourth driving assembly 330 may be a structure of a cylinder and a crank-slider, and drives the pull rod 350 to move up and down and/or rotate inside the sleeve 340. As shown in Figs. 3, 6 and 11, during the operation of the second gripping device 300, the four locking elements 310 are controlled by the third driving assembly 320 to move transversely and longitudinally, such that the four locking elements 310 are aligned to the positions of the cylindrical grooves 520 in the traction battery module 500, then the locking elements 310 are inserted in the cylindrical grooves 520 by the manipulator, and then the pull rod 350 is pulled by the fourth driving assembly 330, such that the pull rod 350 moves upwards inside the sleeve 340 and further makes the fixed portion 360 open the movable plates 370, so as to lock in the cylindrical grooves 520 to remove the traction battery module 500, and such an arrangement has a simple structure. In a second embodiment of the second gripping device 300, one locking element 310 is provided, and the third driving assembly 320 may be two cylinders to control the locking element 310 to move transversely and longitudinally. One, two, three or more locking elements 310 may be provided. As shown in Figs. 4 and 12, the third gripping device 400 comprises the sucker 410 mounted on the connecting rack 100. In operation, the sucker 410 is closely attached to a surface of the traction battery module 500, and the third gripping device 400 sucks away the air in the sucker 410, such that the sucker 410 may firmly attract the traction battery module 500. Two, three or more movable plates 370 may be provided. Specifically, as shown in Fig. 4, the third gripping device 400 further comprises a suction pipe 420, and the suction pipe 420 is configured to discharge the air in the sucker 410.

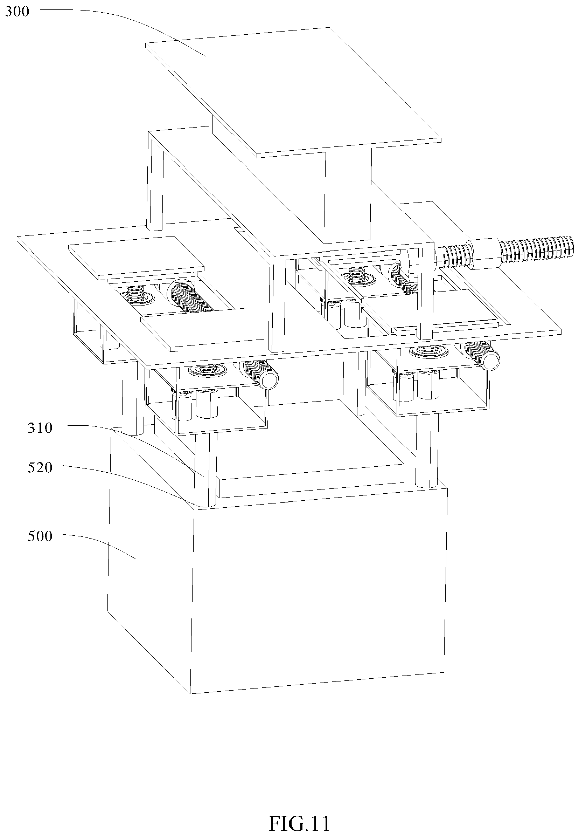

As shown in Figs. 2 and 10, the first gripping device 200 is equipped with the hooks 221 and is adjustable in position so as to be adapted to disassemble the traction battery module 500 with the hook grooves 510. As shown in Figs. 3 and 11, the second gripping device 300 is equipped with the locking elements 310 and is adjustable in position so as to be adapted to disassemble the traction battery module 500 with cylindrical grooves 520. As shown in Figs. 4 and 12, the third gripping device 400 is equipped with the sucker 410 so as to be adapted to disassemble the traction battery module 500 without the hook grooves 510 and the cylindrical grooves 520. The first gripping device, the second gripping device and the third gripping device are provided to disassemble traction battery modules 500 with different structures, shapes and sizes, thereby replacing conventional manual operations and reducing the loss of manpower. The device for automatically disassembling a traction battery module is controlled by the robot arm. When the traction battery module 500 is disassembled, damage to a battery pack and the traction battery module 500 may be prevented, the battery module may be accurately positioned and gripped, such that touching unnecessary parts may be avoided, the integrity of the battery module can be well maintained, and potential safety hazards caused by the damage to the traction battery pack and the traction battery module 500 may also be prevented.

In some embodiments of the present disclosure, as shown in Fig. 2, the first gripping device 200 further comprises a frame 250 connected to the connecting rack 100, the first driving assembly 230 is mounted on the frame 250, the first driving assembly 230 comprises a first lead screw 231, a first motor 232 and a first slider 233, an upper end of the first hook set 210 is connected to the bottom of the first slider 233, and an upper end of the second hook set 220 is connected to the bottom of the frame 250. In operation, the first motor 232 rotates, the first slider 233 moves on the first lead screw 231 to further drive the first hook set 210 to move left and right, so as to be adapted for the traction battery modules 500 with different sizes.

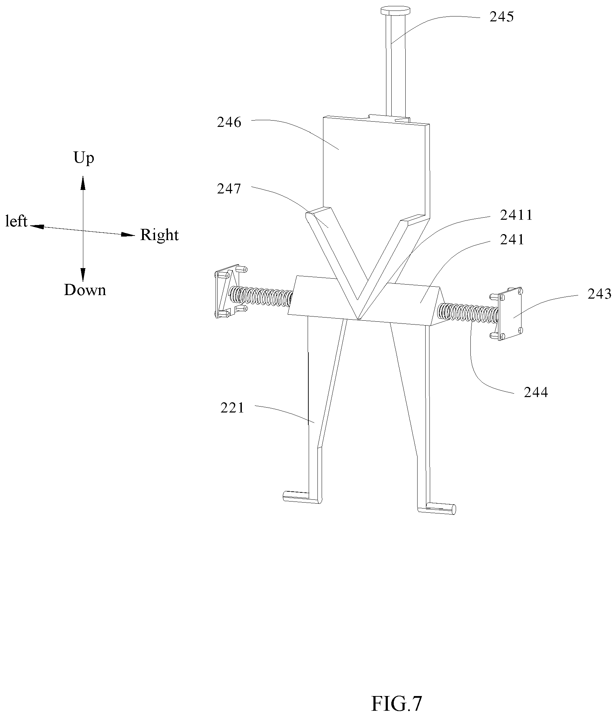

In some embodiments of the present disclosure, as shown in Figs. 2 and 7, the second driving assembly 240 comprises a second slider 241, a mount 242, a baffle 243, a first spring 244, a cylinder 245, a third slider 246 and a push plate 247, wherein the hooks 221 are connected to the second slider 241, the bottom of the mount 242 is provided with a first sliding slot 2421 matching with the hooks 221 and the second slider 241, the second slider 241 is mounted in the first sliding slot 2421, the first sliding slot 2421 is sealed by the baffle 243, and the first spring 244 is disposed between the baffle 243 and the second slider 241. The cylinder 245 is connected to the third slider 246, the bottom of the third slider 246 is connected to the push plate 247, the mount 242 is provided with a second sliding slot 2422 matching with the third slider 246, the push plate 247 and the second slider 241, and the third slider 246 and the push plate 247 are mounted on the second sliding slot 2422. When the cylinder 245 pushes the push plate 247 to move downwards, the push plate 247 abuts against the second slider 241 such that the push plate 247 pushes the second slider 241 to move along the first sliding slot 2421. Specifically, the third slider 246 is I-shaped, and the third slider 246 and the second sliding slot 2422 are in concave-convex fitting, which may ensure the accuracy in movement of the third slider 246 during pushing. As shown in Fig. 7, in operation, the cylinder 245 pushes the push plate 247 to move downwards along the second sliding slot 2422, a left side and a right side of the push plate 247 abut against the second slider 241 to push the second slider 241 to move left and right along the first sliding slot 2421. Since the first spring 244 is provided and the first spring 244 is a compression spring, the first spring 244 is compressed when the second slider 241 moves left and right, and the compressed first spring 244 pushes the second slider 241 toward the middle by a counter force when the traction battery module 500 is placed, such that the second slider 241 returns to the initial position.

In a further embodiment of the present disclosure, as shown in Fig. 7, the second slider 241 is triangular, the push plate 247 is triangular, and a notch 2411 matching with the push plate 247 is provided at a position where the second slider 241 abuts against the push plate 247. When the second slider 241 is pushed to move, the bottom of the push plate 247 matches with the notch 2411 to push the second slider 241 to move. Such an arrangement has a simple structure and reliable transmission.

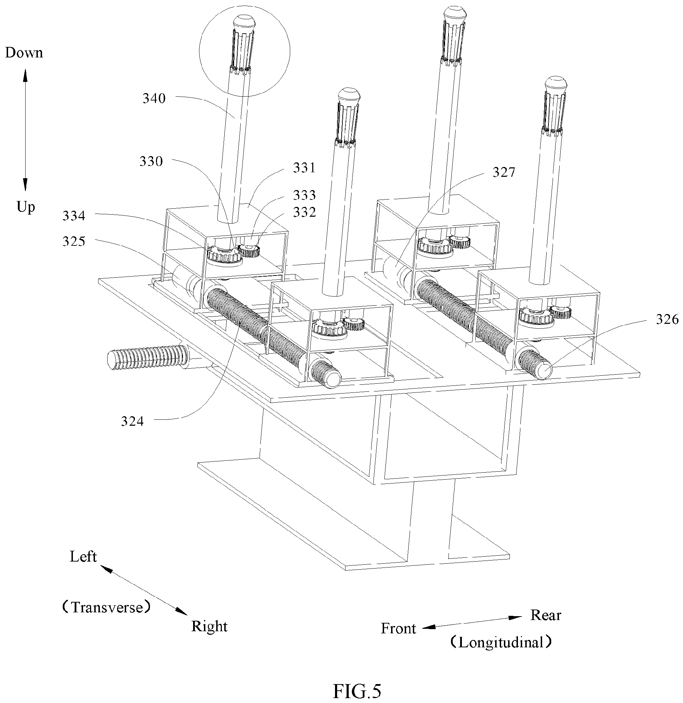

In some embodiments of the present disclosure, as shown in Fig. 5, four locking elements 310 are provided, the third driving assembly 320 comprises a base 321 connected to the connecting rack 100, a translation frame body 322, a second motor 323, a second lead screw 324, a third motor 325, a third lead screw 326 and a fourth motor 327, the base 321 is provided with a first recess 3211 and a second recess 3212, the translation frame body 322 is movably connected to the first recess 3211, the four locking elements 310 are movably connected to the second recess 3212 and the translation frame body 322 respectively, and the second motor 323 drives the translation frame body 322 to move. The two locking elements 310 located on the translation frame body 322 are connected to the second lead screw 324, and the second lead screw 324 is connected to the third motor 325. The two locking elements 310 located on the second recess 3212 are connected to the third lead screw 326, and the third lead screw 326 is connected to the fourth motor 327. Threads of the second lead screw 324 and threads of the third lead screw 326 each are divided into two sections, and the two sections of threads run in reverse directions. As shown in Figs. 3 and 5, in operation, the second motor 323 drives the translation frame body 322 to move forward and backward to further adjust the longitudinal movement position, and the third motor 325 and the fourth motor 327 are started to further drive the third lead screw 326 and the second lead screw 324 to rotate. Because the third lead screw 326 and the second lead screw 324 each are provided with two sections of threads running in reverse directions, the two locking elements 310 located on the third lead screw 326 or the second lead screw 324 can make relative movement (for example, the left locking element 310 moves left and the right locking element 310 moves right). The reverse threads and the translation frame body 322 cooperate with the second motor 323 to enable the transverse and longitudinal movements of the locking elements 310. Such a structure has accurate and stable transmission and can disassemble traction battery modules 500 with different sizes and with cylindrical grooves 520.

In some embodiments of the present disclosure, as shown in Fig. 5, the fourth driving assembly 330 comprises a chassis 331, a driving wheel 332, a fifth motor 333 and a driven wheel 334, the sleeve 340 is mounted on the chassis 331, the bottom of the pull rod 350 is provided with threads, the driving wheel 332 is connected to the fifth motor 333, and the driven wheel 334 is in threaded connection with both the driving wheel 332 and the pull rod 350. Specifically, the chassis 331 is mounted at the bottom of the base 321. In operation, the fifth motor 333 drives the driving wheel 332 to rotate, and the driving wheel 332 drives the driven wheel 334 to rotate. At this time, the threads of the pull rod 350 match with the threads in the driven wheel 334, such that the pull rod 350 moves upward or downward. Such a structure has stable transmission, the degree of opening of the movable plates 370 can be finely adjusted, and excessive locking of the cylindrical grooves 520 is avoided.

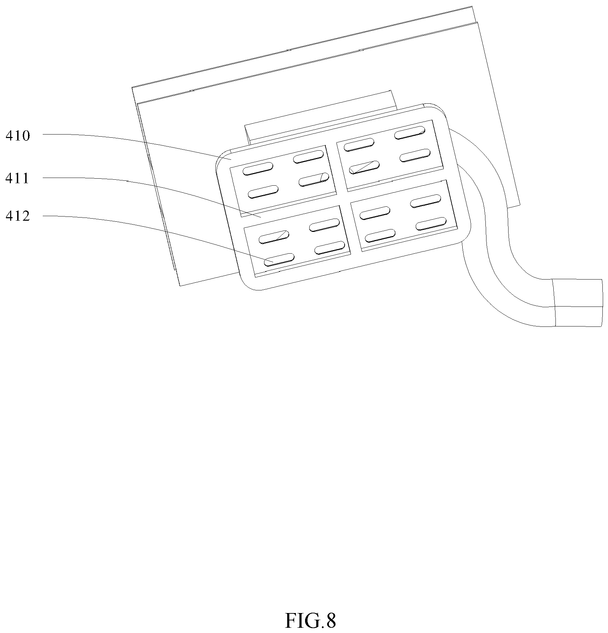

In some embodiments of the present disclosure, as shown in Fig. 8, the bottom of the sucker 410 is provided with a partition plate 411 and a plurality of suction holes 412 to improve the stability of the sucker 410 and to be adapted to disassemble traction battery modules 500 with different sizes. Two, three or more suction holes 412 may be provided.

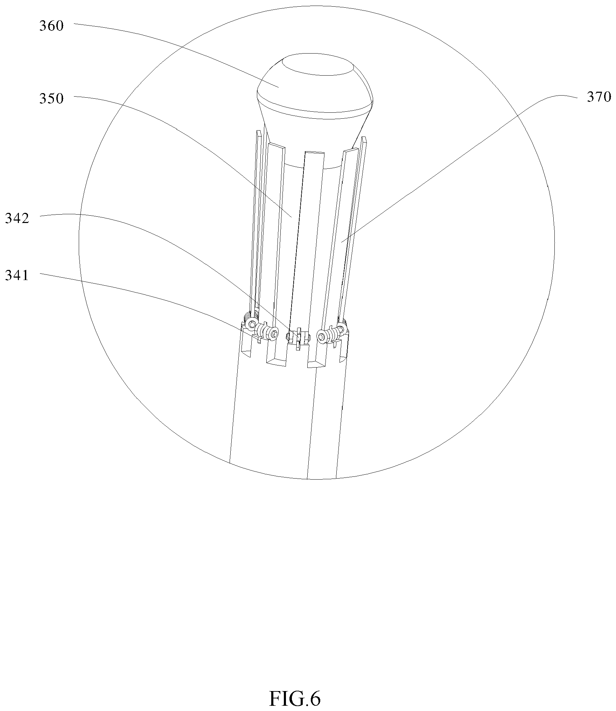

In a further embodiment of the present disclosure, as shown in Fig. 6, the sleeve 340 is provided with a plurality of third recesses 341, a plurality of movable plates 370 are hinged to the third recesses 341, and a second spring 342 is provided at each hinged position. A second spring 342 is provided to automatically tighten the movable plates 370 when the cylindrical grooves 520 need to be loosened, so as to cooperate in loosening the traction battery module 500 and facilitate the gripping of the traction battery module 500 next time. Two, three or more third recesses 341 may be provided.

In some embodiments of the present disclosure, as shown in Fig. 6, a front end of the fixed portion 360 is a rounded fillet, and a rear end of the fixed portion 360 is conical, so as to slowly open the movable plates 370 when the pull rod 350 moves upward and to avoid dramatic increase in the tension of the pull rod 350 during pulling, which damages the meshing of gears.

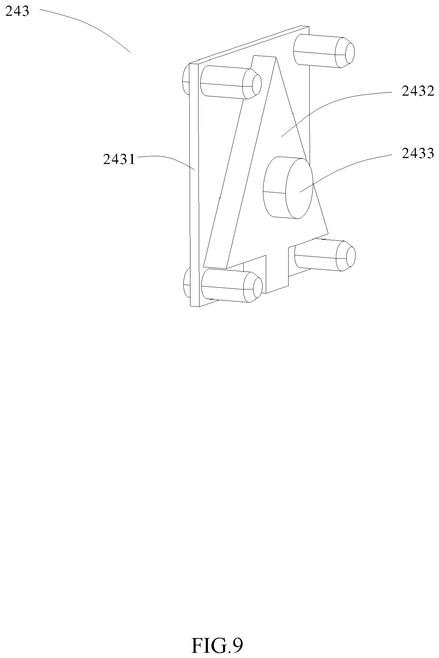

In a further embodiment of the present disclosure, as shown in Fig. 9, the baffle 243 comprises a base plate 2431, a middle plate 2432 mounted on the base plate 2431 and a fixing strut 2433 mounted on the middle plate 2432, and the middle plate 2432 matches with the first sliding slot 2421. The fixing strut 2433 is provided to function to facilitate the mounting of the first spring 244 and the positioning of the first spring 244. The middle plate 2432 is provided to facilitate the positioning and mounting of the bottom.

The scope of the present disclosure is defined by the claims.

## Claims

1. A device for automatically disassembling a traction battery module, comprising a connecting rack (100) connected to a robot arm, wherein the device further comprises:
a first gripping device (200) mounted on the connecting rack (100), the first gripping device (200) comprising a first hook set (210), a second hook set (220), a first driving assembly (230) and a second driving assembly (240), wherein the first driving assembly (230) is configured to drive the first hook set (210) and/or the second hook set (220) to move, the first hook set (210) and the second hook set (220) each are provided with two hooks (221) that are arranged symmetrically and relatively movable, and the second driving assembly (240) is configured to drive two of the hooks (221) to move relatively; and
a second gripping device (300) comprising several locking elements (310);
**characterized in that**:
the second driving assembly (240) comprises a second slider (241), a mount (242), a baffle (243), a first spring (244), a cylinder (245), a third slider (246) and a push plate (247), the hooks (221) are connected to the second slider (241), the bottom of the mount (242) is provided with a first sliding slot (2421) matching with the hooks (221) and the second slider (241), the second slider (241) is mounted in the first sliding slot (2421), the first sliding slot (2421) is sealed by the baffle (243), and the first spring (244) is disposed between the baffle (243) and the second slider (241); the cylinder (245) is connected to the third slider (246), the bottom of the third slider (246) is connected to the push plate (247), the mount (242) is provided with a second sliding slot (2422) matching with the third slider (246), the push plate (247) and the second slider (241), and the third slider (246) and the push plate (247) are mounted above the second sliding slot (2422); and when the cylinder (245) pushes the push plate (247) to move downwards, the push plate (247) abuts against the second slider (241) such that the push plate (247) pushes the second slider (241) to move along the first sliding slot (2421);
the several locking elements (310) are movably arranged on the connecting rack (100), a third driving assembly (320) and a fourth driving assembly (330), wherein the third driving assembly (320) is configured to drive the locking elements (310) to move transversely and longitudinally, the locking elements (310) each comprise a sleeve (340) and a pull rod (350) movably connected in the sleeve (340), and the fourth driving assembly (330) is configured to drive the pull rod (350) to move; a bottom end of the pull rod (350) is provided with a fixed portion (360), and one end of the sleeve (340) that is close to the fixed portion (360) is provided with a plurality of movable plates (370); and when the fixing portion (360) is positioned in the plurality of movable plates (370), the fixed portion (360) enables the plurality of movable plates (370) to open; and
the device further comprises a third gripping device (400) comprising a sucker (410) mounted on the connecting rack (100).

2. The device for automatically disassembling a traction battery module according to claim 1, wherein the second slider (241) is triangular, the push plate (247) is triangular, and a notch (2411) matching with the push plate (247) is provided at a position where the second slider (241) abuts against the push plate (247).

3. The device for automatically disassembling a traction battery module according to claim 1, wherein the baffle (243) comprises a base plate (2431), a middle plate (2432) mounted on the base plate (2431) and a fixing strut (2433) mounted on the middle plate (2432), and the middle plate (2432) matches with the first sliding slot (2421).

## Patentansprüche

1. Vorrichtung zur automatischen Demontage eines Traktionsbatteriemoduls, die ein Verbindungsgestell (100) umfasst, das mit einem Roboterarm verbunden ist, wobei die Vorrichtung ferner Folgendes umfasst:
eine erste Greifvorrichtung (200), die an dem Verbindungsgestell (100) montiert ist, wobei die erste Greifvorrichtung (200) einen ersten Hakensatz (210), einen zweiten Hakensatz (220), eine erste Antriebsbaugruppe (230) und eine zweite Antriebsbaugruppe (240) umfasst, wobei die erste Antriebsbaugruppe (230) ausgebildet ist, um den ersten Hakensatz (210) und/oder den zweiten Hakensatz (220) zu bewegen, wobei der erste Hakensatz (210) und der zweite Hakensatz (220) jeweils mit zwei Haken (221) versehen sind, die symmetrisch und relativ beweglich angeordnet sind, und die zweite Antriebsbaugruppe (240) ausgebildet ist, um zwei der Haken (221) zur Relativbewegung anzutreiben; und
eine zweite Greifvorrichtung (300), die mehrere Verriegelungselemente (310) umfasst; **dadurch gekennzeichnet, dass**:
die zweite Antriebsbaugruppe (240) einen zweiten Schieber (241), eine Halterung (242), ein Prallblech (243), eine erste Feder (244), einen Zylinder (245), einen dritten Schieber (246) und eine Druckplatte (247) umfasst, wobei die Haken (221) mit dem zweiten Schieber (241) verbunden sind, der Boden der Halterung (242) mit einem ersten Gleitschlitz (2421) versehen ist, der mit den Haken (221) und dem zweiten Schieber (241) zusammenpasst, der zweite Schieber (241) in dem ersten Gleitschlitz (2421) montiert ist, der erste Gleitschlitz (2421) durch das Prallblech (243) abgedichtet ist, und die erste Feder (244) zwischen dem Prallblech (243) und dem zweiten Schieber (241) angeordnet ist; wobei der Zylinder (245) mit dem dritten Schieber (246) verbunden ist, der Boden des dritten Schiebers (246) mit der Druckplatte (247) verbunden ist, die Halterung (242) mit einem zweiten Gleitschlitz (2422) versehen ist, der mit dem dritten Schieber (246), der Druckplatte (247) und dem zweiten Schieber (241) zusammenpasst, und der dritte Schieber (246) und die Druckplatte (247) über dem zweiten Gleitschlitz (2422) montiert sind; und wenn der Zylinder (245) die Druckplatte (247) nach unten drückt, die Druckplatte (247) gegen den zweiten Schieber (241) anliegt, so dass die Druckplatte (247) den zweiten Schieber (241) drückt, um sich entlang des ersten Gleitschlitzes (2421) zu bewegen;
wobei die mehreren Verriegelungselemente (310) beweglich an dem Verbindungsgestell (100) sowie an einer dritten Antriebsbaugruppe (320) und einer vierten Antriebsbaugruppe (330) angeordnet sind, wobei die dritte Antriebsbaugruppe (320) ausgebildet ist, um die Verriegelungselemente (310) anzutreiben, damit sie sich in Quer- und Längsrichtung bewegen, wobei die Verriegelungselemente (310) jeweils eine Hülse (340) und eine Zugstange (350) umfassen, die beweglich in der Hülse (340) verbunden ist, und wobei die vierte Antriebsbaugruppe (330) ausgebildet ist, um die Zugstange (350) anzutreiben, damit sie sich bewegt; wobei ein unteres Ende der Zugstange (350) mit einem fixierten Abschnitt (360) versehen ist und ein Ende der Hülse (340), das sich in der Nähe des fixierten Abschnitts (360) befindet, mit einer Vielzahl von beweglichen Platten (370) versehen ist; und wenn der fixierte Abschnitt (360) in der Vielzahl von beweglichen Platten (370) positioniert ist, ermöglicht der fixierte Abschnitt (360) das Öffnen der Vielzahl von beweglichen Platten (370); und
wobei die Vorrichtung ferner eine dritte Greifvorrichtung (400) umfasst, die einen Saugnapf (410) umfasst, der an dem Verbindungsgestell (100) montiert ist.

2. Vorrichtung zur automatischen Demontage eines Traktionsbatteriemoduls nach Anspruch 1, wobei der zweite Schieber (241) dreieckig ist, die Druckplatte (247) dreieckig ist und eine Kerbe (2411), die mit der Druckplatte (247) zusammenpasst, an einer Position vorgesehen ist, an der der zweite Schieber (241) an der Druckplatte (247) anliegt.

3. Vorrichtung zur automatischen Demontage eines Traktionsbatteriemoduls nach Anspruch 1, wobei das Prallblech (243) eine Grundplatte (2431), eine Mittelplatte (2432), die an der Grundplatte (2431) montiert ist, und eine Fixierstrebe (2433) umfasst, die an der Mittelplatte (2432) montiert ist, und wobei die Mittelplatte (2432) mit dem ersten Gleitschlitz (2421) zusammenpasst.

## Revendications

1. Dispositif de démontage automatique d'un module de batterie de traction, comprenant une baie de liaison (100) reliée à un bras de robot, dans lequel le dispositif comprend en outre :
un premier dispositif de préhension (200) monté sur la baie de liaison (100), le premier dispositif de préhension (200) comprenant un premier groupe de crochets (210), un deuxième groupe de crochets (220), un premier ensemble d'entraînement (230) et un deuxième ensemble d'entraînement (240), dans lequel le premier ensemble d'entraînement (230) est configuré pour entraîner le premier groupe de crochets (210) et/ou le deuxième groupe de crochets (220) pour les déplacer, le premier groupe de crochets (210) et le deuxième groupe de crochets (220) sont chacun pourvus de deux crochets (221) qui sont disposés symétriquement et relativement mobiles, et le deuxième ensemble d'entraînement (240) est configuré pour entraîner deux des crochets (221) pour les déplacer relativement ; et
un deuxième dispositif de préhension (300) comprenant plusieurs éléments de verrouillage (310) ; **caractérisé en ce que** :
le deuxième ensemble d'entraînement (240) comprend un deuxième curseur (241), un support (242), un déflecteur (243), un premier ressort (244), un cylindre (245), un troisième curseur (246) et une plaque de poussée (247), les crochets (221) sont reliés au deuxième curseur (241), la partie inférieure du support (242) est pourvue d'une première fente de coulissement (2421) correspondant aux crochets (221) et au deuxième curseur (241), le deuxième curseur (241) est monté dans la première fente de coulissement (2421), la première fente de coulissement (2421) est scellée par le déflecteur (243), et le premier ressort (244) est disposé entre le déflecteur (243) et le deuxième curseur (241) ; le cylindre (245) est relié au troisième curseur (246), la partie inférieure du troisième curseur (246) est reliée à la plaque de poussée (247), le support (242) est pourvu d'une deuxième fente de coulissement (2422) correspondant au troisième curseur (246), à la plaque de poussée (247) et au deuxième curseur (241), et le troisième curseur (246) et la plaque de poussée (247) sont montés au-dessus de la deuxième fente de coulissement (2422) ; et lorsque le cylindre (245) pousse la plaque de poussée (247) pour la déplacer vers le bas, la plaque de poussée (247) vient en butée contre le deuxième curseur (241) de sorte que la plaque de poussée (247) pousse le deuxième curseur (241) pour le déplacer le long de la première fente de coulissement (2421) ;
les plusieurs éléments de verrouillage (310) sont disposés de manière mobile sur la baie de liaison (100), un troisième ensemble d'entraînement (320) et un quatrième ensemble d'entraînement (330), dans lequel le troisième ensemble d'entraînement (320) est configuré pour entraîner les éléments de verrouillage (310) pour les déplacer transversalement et longitudinalement, les éléments de verrouillage (310) comprennent chacun un manchon (340) et une tige de traction (350) reliée de manière mobile dans le manchon (340), et le quatrième ensemble d'entraînement (330) est configuré pour entraîner la tige de traction (350) pour la déplacer ; une extrémité inférieure de la tige de traction (350) est pourvue d'une portion fixe (360), et une extrémité du manchon (340) qui est proche de la portion fixe (360) est pourvue d'une pluralité de plaques mobiles (370) ; et lorsque la portion fixe (360) est positionnée dans la pluralité de plaques mobiles (370), la portion fixe (360) permet à la pluralité de plaques mobiles (370) de s'ouvrir ; et
le dispositif comprend en outre un troisième dispositif de préhension (400) comprenant une ventouse (410) montée sur la baie de liaison (100).

2. Dispositif de démontage automatique d'un module de batterie de traction selon la revendication 1, dans lequel le deuxième curseur (241) est triangulaire, la plaque de poussée (247) est triangulaire, et une encoche (2411) correspondant à la plaque de poussée (247) est pourvue dans une position où le deuxième curseur (241) vient en butée contre la plaque de poussée (247).

3. Dispositif de démontage automatique d'un module de batterie de traction selon la revendication 1, dans lequel le déflecteur (243) comprend une plaque de base (2431), une plaque centrale (2432) monté sur la plaque de base (2431) et un étai de fixation (2433) monté sur la plaque centrale (2432), et la plaque centrale (2432) correspond à la première fente de coulissement (2421).
